# EUROPEAN PATENT SPECIFICATION

(11) **EP 2 516 743 B1**
(45) Date of publication and mention of the grant of the patent: **02.04.2014**
(21) Application number: 10796300.1
(22) Date of filing: 21.12.2010
(51) Int. Cl.: E01B 2/00, E01B 21/00, E01B 25/00, B60L 5/00

(54) **TRACK FOR A TRACK BOUND VEHICLE**
STRECKE FÜR EIN SCHIENENGEBUNDENES FAHRZEUG
VOIE POUR UN VÉHICULE SUR VOIE

(30) Priority: 21.12.2009 GB 0922313
(43) Date of publication of application: 31.10.2012
(73) Proprietor: Bombardier Transportation GmbH, 10785 Berlin (DE)
(72) Inventor: VOLLENWYDER, Kurt, Kingston Ontario K7M 3Y8 (CA); BAADE, Michael, Amherstview Ontario K7N OA4 (CA); WORONOWICZ, Konrad, Kingston, Ontario K7P OE4 (CA); SIEDMIOGROZKI, Kris, Amherstview Ontario K7N 1KZ (CA); SEIFFERT, Harry, CH-1073 Savigny (CH)
(74) Representative: Patentanwälte Bressel und Partner mbB
(86) International application number: PCT/EP2010/007987
(87) International publication number: WO 2011/076435

(56) References cited:
- WO-A2-2010/031596
- US-A- 4 665 829
- US-A- 5 314 115
- US-A- 6 085 663

## Description

The invention relates to an arrangement for and a method of building a track for track bound vehicles, in particular for light rail vehicles, such as trams. Examples of track bound vehicles are conventional rail vehicles, mono-rail vehicles, metros and busses (which may be guided on the track by optical means or mechanical means other than rails).

Track bound vehicles, in particular vehicles for public passenger transport, usually comprise a contactor for mechanically and electrically contacting a line conductor along the track, such as an electric rail or an overhead line. Typically, at least one propulsion motor on board the vehicles is fed with the electrical power from the external track or line and produces mechanic propulsion energy. In addition or alternatively, the transferred energy can be used for operating auxiliary systems of the vehicle. Such auxiliary systems, which do not produce traction of the vehicle, are, for example, lighting systems, heating and/or air conditioning system, the air ventilation and passenger information systems.

Trams and other local or regional trains are operated usually via overhead lines within cities. However, especially in historic parts of cities, overhead lines are undesirable. On the other hand, conductor rails in the ground or near the ground cause safety problems.

WO 95/30556 A2, disclosing the features of the preamble of claim 1, describes a road way-powered electric vehicle system. The all-electric vehicle has one or more on-board energy storage elements or devices that can be rapidly charged or energized with energy obtained from an electrical current, such as a network of electromechanical batteries. The energy storage elements may be charged while the vehicle is in operation. The charging occurs through a network of power coupling elements, e.g. coils embedded in the road way. Inductive heating coils are located at passenger loading / unloading zones in order to increase passenger safety.

Placing the coils at selected locations along the length of the roadway has the disadvantage that the energy storage on board the vehicle needs a large storage capacity. In addition, if the vehicle does not reach the next coil in time, the vehicle might run out of energy for propulsion or other purposes. Therefore, at least for some applications, it is preferred to transfer energy to the vehicle continuously along the path of travel, i.e. along the track.

The present invention relates to inductively transferring energy from an arrangement of electrical conductors, which is arranged along the track, to the vehicle while the vehicle is travelling along the track. There is no electrical contact between the vehicle and the conductor arrangement. The conductor arrangement carries an alternating current which generates a corresponding alternating electromagnetic field and the electromagnetic field is used to transfer the electrical energy to the vehicle.

Inductively transferring energy from the track to the vehicle, i.e. producing electromagnetic fields is subject to restrictions regarding EMC (electromagnetic compatibility). On one hand, electromagnetic fields may interfere with other technical devices. On the other hand, people and animals should not be subjected to electromagnetic fields permanently. At least, the respective limit values for field intensity must be observed.

In addition, time and effort for building the track should be kept as small as possible. Especially within historic parts of cities, construction work should be finished within a few weeks or even within days.

US 4,665,829 discloses a guideway construction for a transportation system. The guideway includes a plurality of guideway sections linked in end to end relationship. Each section has a pair of upper horizontal stringers located parallel to each other and are placed parallel to and above a pair of lower horizontal stringers. A plurality of vertically oriented diagonal members are affixed to the upper and lower horizontal stringers. A plurality of horizontally oriented diagonal members are affixed to and join the lower horizontal stringers so that the sides and the bottom are joined by diagonal members forming a generally upwardly extending U-shaped configuration for the guideway. The guideway itself is substantially enclosed by a cover, but for an upper slit and a lower slit. The cover protects the guideway from lightning which can damage the electrical wiring within the guideway used to power and control the vehicles.

It is an object of the present invention to provide an arrangement and a method of building a track of a track bound vehicle, which allows for continuous transfer of energy during travel and which reduces construction work time on site. Furthermore, the respective limits of EMC standards shall be met and corresponding means for meeting the limits shall function reliably.

According to a basic idea of the present invention different elements are combined with each other to perform a pre-fabricated track module. In principle, the pre-fabrication may be performed at any location, including a location nearby the location where the track is to be built. However, in any case, the pre-fabrication is performed before the track module is positioned and oriented in a desired manner. With this position and orientation, the track module forms part of a track.

Preferably, a plurality of track modules is pre-fabricated and is arranged one next to each other so that the plurality of track modules forms the track. In the case of a railway having two rails, sections of the rails may be part of the pre-fabricated track modules and, for example, rail sections of neighbouring track modules may be welded or otherwise connected to each other as soon as the track modules are placed in the desired position and orientation. Optionally, other connections, such as electric connections, may be performed in order to connect neighbouring track modules after positioning and orienting them in the desired manner.

It is possible that the individual track modules have the same length or that the length in the direction of travel differs. In addition, or alternatively, some of the track modules may be designed to form a straight section of the track and others may be designed to form a curved section of the track.

In any case, it is preferred that the pre-fabricated track modules are placed in the desired manner and, afterwards or while they are positioned, are fixed in the final position and orientation. For example, the track module may be embedded in concrete or other suitable material. This embedment concrete may be provided before or after positioning the track module in the desired manner. In principle, this step of embedding the track module in concrete may be performed as known in the art for track modules of different type compared to the type of track module of the present invention.

For example, according to a specific embodiment which may be used for railways of trams, the track module may have a length of 15 to 20 metres in the direction of travel, for example 18 metres. Preferably, the length is chosen so that a conductor arrangement which is part of the pre-fabricated track module or which is laid afterwards in spaces confined by the track module, forms a section of a system for inductively transferring energy to the vehicle on the track, wherein the section is operable separately of the other conductor arrangements of the other track modules. This means that only this or these conductor arrangements can produce electromagnetic fields which are needed to provide vehicles with energy. Other track modules' conductor arrangements may be switched off, because no vehicle is travelling on the track module.

A track module may comprise more than one section formed by a conductor arrangement which is operable separately of other conductor arrangements. For example, the track module may have a length of 18 metres and may comprise two conductor arrangements behind one another in the direction of travel which can be operated separately. "Operating a conductor arrangement" means that the conductor arrangement produces an electromagnetic field having enough power to transfer the desired energy to the vehicle within the desired time interval.

One essential component of the pre-fabricated track module is at least one support element for supporting wires and/or lines of the conductor arrangement. As mentioned earlier, the wires and/or lines may be laid onto or in the support element while the track module is pre-fabricated or afterwards.

Other essential and optional components and features of the pre-fabricated track module are the following: This means that the support element can be combined with any combination of the components and/or features in the following list, within the limits of the attached claims that define the scope of protection:
- An electrically conductive shield for shielding the alternating electromagnetic field which is produced by the conductor arrangement during operation, wherein the shield extends along a plane below the spaces which are confined by the support element for receiving the lines and/or wires of the conductor arrangement. The shield may be electrically connected to at least one of the rails, preferably to both rails of a two-rail railway.
- A housing for receiving a power supply device for supplying electric power to the conductor arrangement. The housing may be formed by a cavity of the pre-fabricated track module, for example by a cavity in concrete material or by a metal housing.
- A vehicle guiding element, in particular a rail, for guiding the vehicles on the track. In case of a railway having two rails on which wheels of a rail vehicle roll while the vehicle is travelling on the track, the two rails are extending in the direction of travel at the desired distance to each other. As principally known in the art, the rails can be fixed by additional fixing elements, for example elements made of plastic material, in the desired position and distance to each other.
- The pre-fabricated track module comprises at least one through-hole extending from the cavity or housing to at least one of the spaces, wherein the through-hole is adapted to receive wires and/or cables for electrically connecting the power supply device within the housing with the conductor arrangement.
- The spaces which are confined by the support element for receiving lines and/or wires of the conductor arrangement extend transversely to the travel direction of the vehicle which is defined by the track, so that the lines and/or wires can be laid in a serpentine-like manner on the support element. Corresponding transversely extending lines or wires have the advantage that the electromagnetic fields produced by these sections compensate each other sideways of the track, since the electric current alternatingly flows through these sections in opposite direction (at each point in time). In case of a multi-phase alternating current, the same applies to the wires or lines of each phase, i.e. each phase is formed by lines or wires extending in serpentine-like manner along the track.
- An inverter for inverting a direct current of a supply line to an alternating current in the conductor arrangement is placed within the housing. The track module may comprise not just a single housing, but more than one housing or cavity. In this case, the second housing or cavity may also house an inverter or another device which is used to operate the conductor arrangement. Such another device may be a detection device as explained below. However, the track module may also comprise a single housing or cavity which houses the inverter and the detection device. This version is preferred, since it is also preferred that the inverter is operated or not operated depending on a signal which is produced by the detection device.
- A detector arrangement for detecting the presence of a vehicle upon the track module is integrated in the pre-fabricated track module, wherein a detection device of the detector arrangement is placed in the housing. For example, the detector arrangement may comprise a loop of an electric line which extends in a nearly horizontal plane through the track module. The loop produces an electric voltage depending on the presence of a vehicle on the track module. The detection device may detect the inductively produced voltage or a change of the voltage for detection of the vehicle. If the vehicle is detected, the detection device controls the inverter to produce the alternating current through the conductor arrangement of the track module which in turn produces the electromagnetic field for transferring energy to the vehicle on the track module.
- A cover, such as a cover made of rubber elements, may be provided to cover the wires and/or lines of the conductor arrangement so that the wires or lines are protected from damage and so that people or devices are protected against direct electric contact.

In particular, the following arrangement is proposed: An arrangement for building a track for track bound vehicles, in particular for light rail vehicles, wherein the arrangement comprises:
- a support element for supporting an electric conductor arrangement, which is adapted to produce an alternating electromagnetic field and - thereby -to transfer electromagnetic energy to vehicles on the track, wherein the support element confines spaces for receiving lines and/or wires of the conductor arrangement,
- an electrically conductive shield for shielding the alternating electromagnetic field, wherein the shield extends along a plane below the spaces,and
- a housing or cavity for receiving a power supply device for supplying electric power to the conductor arrangement,
wherein the support element, the electrically conductive shield and the housing form a pre-fabricated track module.

Integrating the electrically conductive shield in the pre-fabricated track module has the advantage that the region below the track module is shielded from the electromagnetic field produced by the conductor arrangement. Especially within cities, this may be a precondition in order to meet the EMC limits. In addition, the shield is protected against damage. If the shield would be placed on site, where the track is to be built, placing the support element on top of the shield may damage the shield. For example, the shield may be a copper mesh. The shield may be integrated in concrete or other material of the track module.

In case of a railway having two rails, the housing or cavity may be located sideways of the rails, i.e. not in between the rails. It is preferred that the housing has a cover or lid which forms part of the surface of the track module or of an area of the ground which is formed by an additional arrangement, such as bricks or other pavement material. If the housing extends from the surface of the track downwardly, the housing is accessible for installation, maintenance and repair. Furthermore, any heat which is produced within the housing can be transferred to the ambient air above the track.

The shield, in particular the mesh, may be bolted or otherwise electrically connected to the bottom part of the metallic rail or rails while the track module is pre-fabricated. Alternatively to embedding the shield in concrete, the shield may be placed between horizontally extending layers of other material, such as between a bottom part of the track module made of concrete and the support element. However, the sandwich arrangement comprising the also horizontally extending shield may comprise additional elements, such as a layer of elastic and electrically insulating material.

In case of the through-hole mentioned above, the through-hole may extend through the shield from the housing or cavity to the space or spaces confined by the support element for receiving the wires and/or lines of the conductor arrangement.

From the above description, several possible embodiments of a method of producing a pre-fabricated track module follow. In particular, a method of building a track for track bound vehicles is proposed, in particular for light rail vehicles, wherein the method comprises the steps:
- providing a support element for supporting an electric conductor arrangement, which is adapted to produce an alternating electromagnetic field and - thereby - to transfer electromagnetic energy to vehicles on the track, wherein the support element confines spaces for receiving lines and/or wires of the conductor arrangement,
- providing an electrically conductive shield for shielding the alternating electromagnetic field, wherein the shield extends along a plane below the spaces,
- providing a housing for receiving a power supply device for supplying electric power to the conductor arrangement and
- forming a pre-fabricated track module comprising the support element, the electrically conductive shield and the housing.

Further embodiments are defined by the attached dependent claims.

Furthermore, besides the arrangement defined above which comprises a single track module, the invention also covers an arrangement comprising more than one track module, in particular, a plurality of track modules, for building a complete track, such as a track having a length in the direction of travel of some hundred metres or a few kilometres.

Preferably, the conductor arrangement for producing the electromagnetic field is located or is to be located within the pre-fabricated track module. The frequency of the alternating current which flows through the conductor arrangement may be in the range of 5-100 kHz, in particular in the range of 10-30 kHz, preferably about 20 kHz.

The principle of transferring the energy by electromagnetic fields has the advantage that the conductor arrangement can be electrically insulated against contact. Since the wires or lines of the conductor arrangement are integrated in the track module, no pedestrian or automobile may unintentionally contact the buried lines. Furthermore, the problem of wear and tear of contactors, which are used to contact standard overhead lines or live rails, is solved.

An arrangement of electrical conductors along the track can be realised in a variety of ways. In principle, the conductor or lines can be cables laid in the ground as usual in road construction or underground engineering. The opening in the ground is then filled and provided with a suitable covering over which the vehicle can travel. For example, in the case of railways, the conductor arrangement can first be laid and then the track bedding for the rails can be made thereupon.

However, too large distance between the conductor arrangement and the vehicle has the disadvantage that the energy is transferred at a low level of efficiency. The closer the conductor arrangement is arranged to a corresponding receiver on or in the vehicle, the better is the inductive coupling. A shaped block as support element is therefore proposed with the help of which one or more electric lines can be positioned and/or held along the track of the vehicle.

The shaped block may have a plurality of recesses and/or projections, wherein edges of the recesses and/or the projections each delimit a space for the line sections into which one of the line sections can be introduced, so that the line section extends through the space in a longitudinal direction of the space. In other words, a plurality of spaces is defined by the form of the shaped block, said spaces having a longitudinal direction, wherein a line section extending in the longitudinal direction can be introduced into each of the spaces.

The form of the shaped block therefore defines at least how line sections will be laid. A plurality of the shaped blocks can therefore be made in serial production and arranged along the track. Subsequently, the electric line or lines can be laid in the manner defined by the shaped blocks. Errors in the positioning of the line sections can therefore easily be avoided.

However, depending on the material from which it is made, the shaped block has other possible functions. In particular, the shaped block can be made from a material which is able to support any load which is expected for the track. For example, road vehicles may cross the railway track. Concrete, especially fibre reinforced concrete, can be considered as a suitable material for this purpose.

Alternatively or additionally, the shaped block can be made of electrically insulating material, so that it serves a protective function against short-circuit and unintentional contacting by objects and persons. Again, concrete is a suitable material, as well as plastics with electrically insulating properties. For example, it is known from railway track construction to arrange components between the rails and above the anchoring of the rails for the purpose of sound damping. These components can be produced by appropriate shaping as shaped blocks according to the invention.

The spaces formed in the shaped block for accommodating the line sections serve to position and/or hold the line sections. In particular, if the dimensions of the spaces are matched with little play to the dimensions of the electric line to be laid, the line section is precisely positioned by the form of the shaped block. The edges of the recess and/or the projections formed on the shaped block serve to hold the line sections if and to the extent that the laid electric line lies against the edges or the projections. At least a movement of the electric line and thus a change in the predetermined placement of the electric line is hindered or prevented with this type of mechanical contact.

According to a further feature of the shaped block, the longitudinal directions of the spaces bordered by the edges of the recesses and/or by the projections extend essentially parallel to one another in a common plane. It is preferred that this common plane essentially extends in horizontal direction under the drive way of the vehicle. In particular, the recesses may extend with their longitudinal directions essentially mutually parallel at the upper surface of the shaped block.

Deviations from an arrangement of the spaces oriented exactly parallel to one another are possible particularly if the shaped block is to be laid at a curve of the track of the vehicle. In this case, the longitudinal directions of mutually adjacent spaces can be oriented other than parallel, depending on their separation and the radius of curvature of the track. However, given a typically small mutual separation of the spaces (preferably at least 0.1 m and not more than 1 m) and the normally much larger radius of curvature of the tracks for vehicles, the longitudinal directions are approximately parallel.

As previously mentioned, the at least one electric line of the conductor arrangement preferably extends along the track or route in a meandering manner, i.e. sections of the electric line which extend in the direction of travel are followed in the course of the conductor by sections which extend transversely to the direction of travel, etc. In the case of a multi-phase system with at least two electric lines, this preferably applies to all the electric lines.

The expression "meandering" used above covers both the laying of an electric line with smoothly curved transitions (having large radii of curvature) between straight electric line sections as well as configurations with sharp, angular transition regions between adjacent straight sections. The longest possible straight sections are preferable, since they generate homogeneous fields. In case of a standard railway for trams having a narrow gauge of 1000 mm, the radius of curvature of the curved transitions between straight electric line sections is preferably above or equal to 18 m. However, this is only an example. The basic principle of the shaped blocks according to the present invention can be applied to different types of railways and other vehicle paths.

The length of the shaped block in the direction of travel may be in the range of 80 - 100 cm, although other lengths are also possible. Usually, the shaped block is significantly shorter than the complete track module, which preferably comprises a series of shaped blocks abutting to each other. The width of the block is preferably slightly smaller than the distance between the rails, in case of a railway. In case of other types of vehicle tracks, the width is preferably at least half the width of the vehicles travelling on the track. The height of the shaped block depends on the size of the electric line or lines and on the type of material of the block. The height should be sufficient to ensure mechanical stability during construction and operation of the vehicles track.

In particular, the at least one shaped block may comprise an end surface for facing in a direction of travel of the vehicle, wherein the end surface comprises a central region and wherein the end surface - if viewed from above - retreatingly extends on both sides of the central region, so that a further shaped block having a plane or retreatingly extending end surface may abut on the end surface oriented in different directions. As mentioned above, the so called "end surface" may extend in vertical and horizontal direction. "Retreatingly extending" means that there are relative orientations of the shaped block and the adjacent shaped block wherein only the central region of the end surface abuts on the adjacent block. If viewed from above, the outline of the end surface may be straight or curved on both sides of the central region. Preferably, the end surfaces of both adjacent shaped blocks are shaped having retreatingly extending sides.

Such retreatingly extending end surfaces have the advantage that the adjacent blocks can be oriented relative to each other at different angels, while they abut on each other in the central region of the end surfaces. This means that shaped blocks can be used for curved track modules with varying radii. For example, the blocks may have a length in the direction of travel of the vehicle in the range of 80 - 100 cm. In this case, the retreatingly extending sides of the end surfaces (if viewed from above) may have a straight outline which extends at an angle of 2.5° - 3° relative to a straight line which extends perpendicularly to the direction of travel. Of course, blocks having such a retreating shape of the end surface can also be arranged adjacent to each other so that they follow a straight path of travel of the vehicle.

If covers are placed over the shaped blocks arranged along the track, this serves, in particular, to protect the shaped blocks and the electric line(s) laid therein or thereon against influences such as unintended trampling by persons, damage during building works or during the laying of the lines, and against the weather. It should, in particular, be avoided that water can enter from above into the spaces for accommodating the line sections and freeze therein. Preferably, the covers can therefore be configured to be broader than the spaces to accommodate the line sections extending transversely to the direction of travel. The covers can therefore extend laterally over the edges of the shaped blocks, providing particularly effective protection.

Alternatively or additionally, the covers can comprise downwardly projecting edges. These edges can extend at least to the height level of the lower edge of the spaces for accommodating the line sections and thus also protect the electrical lines or line sections laid in the spaces against influences from the side.

As described above, covers arranged behind one another in the direction of travel can be mutually connected. Apart from enhancing the mechanical stability and protecting against displacement, this also serves to protect against theft of the electric lines.

As previously stated, the electric conductor arrangement comprises at least one of the lines mentioned above. Preferably, it comprises at least two of these lines, wherein each line is configured or operated to carry one phase of a multi-phase alternating current. In practice, it is preferred that the electric conductor arrangement comprises three lines and that each line is configured to carry one of the three-phases of a three-phase alternating current. However, it is also possible, that the alternating current has more than three phases, so that a corresponding number of electric lines is present as part of the conductor arrangement. The magnetic poles produced by the lines and/or the sections of the different lines form - at each point in time - a repeating sequence extending in the direction of travel, wherein the repeating sequence corresponds to the sequence of the phases. For example, in the case of a three-phase alternating current, having the phases U, V, W, a section carrying phase U is followed by a section carrying phase V which in turn is followed by a section carrying phase W. This sequence of phases U, V, W is repeated several times in the direction of travel. An example is described below in the description of the drawings.

Examples of the present invention will be described with reference to the attached Figures. The Figures show:
- Fig. 1: shows a top view of a shaped block, which is a preferred embodiment of a support element,
- Fig. 2: shows a vertical cross-section through half of the block of Fig. 1,
- Fig. 3: shows a top view of a first arrangement of two blocks according to Fig. 1 and 2,
- Fig. 4: shows a top view of a second arrangement of two blocks according to Fig. 1 and 2,
- Fig. 5: shows a vertical cross-section through a railway track construction, including a pre-fabricated track module, according to a first embodiment of a railway track,
- Fig. 6: an explosive view of a cross-section of a second first embodiment of a railway track,
- Fig. 7: a non-explosive cross-sectional view of the arrangement shown in Fig. 6,
- Fig. 8: an explosive view of a cross-section of a third embodiment of a railway track,
- Fig. 9: a non-explosive cross-sectional view of the arrangement shown in Fig. 8,
- Fig. 10: a perspective view of the arrangement shown in Fig. 6 and 7, wherein parts of the pre-fabricated track module are broken away,
- Fig. 11: a perspective view of the arrangement shown in Fig. 8 and 9,
- Fig. 12: a further cross-sectional view of the arrangement shown in Fig. 7 at a different position in the travel direction, wherein the cross-section comprises a housing for electronic components and a through-hole extending from the housing to the support element.

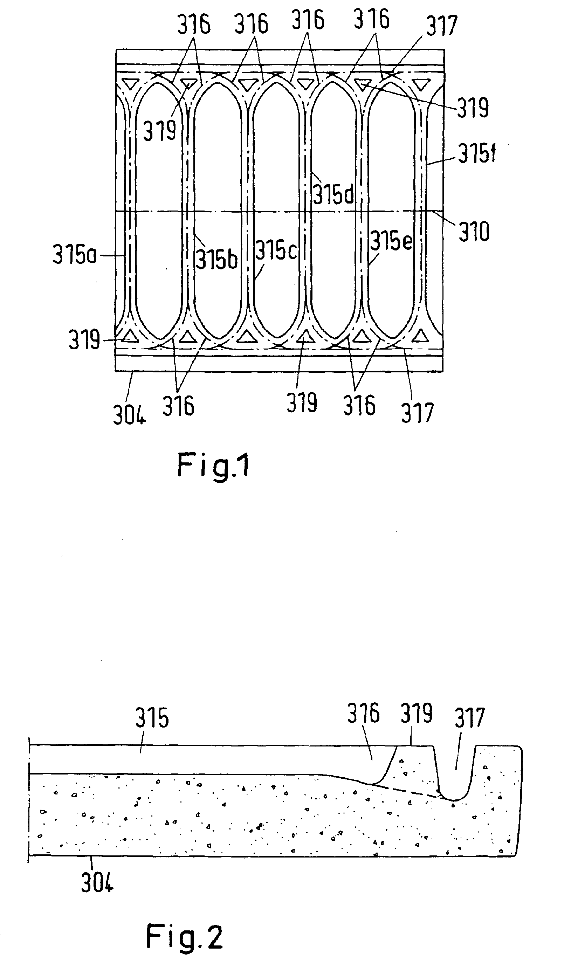

Fig. 1 shows a top view of a shaped block. The block 304 comprises six recesses 315a - 315f which extend perpendicularly to a centre line 310 which divides the block 304 in two halves. The centre line 310 extends in the direction of travel of a vehicle, if the block 304 forms parts of a track for the vehicle.

The recesses 315 are parallel to each other and are arranged within the same horizontal plane which is parallel to the plane of Fig. 1. The recesses 315 extend in width direction (the vertical direction in Fig. 1) over about three quarters of the total width of block 304. They are arranged symmetrically to the centre line 310.

Each recess has a U-shaped cross-section to receive a cable. The dashed lines shown in Fig. 1 which extend along the recesses 315 are centre lines of the recesses 315. At each of the two opposite ends of the straight recesses 315, there a bifurcated curved recess region 316 which forms a transition to a peripheral straight recess 317 extending along the lateral edge of the block 304. Cables can be laid in a manner consecutively extending from the straight recesses 315 through the curved recess region 316 into the peripheral straight recess 317, thereby changing the direction of extension from perpendicular to the direction of travel to parallel to the direction of travel.

The curved recess regions 316 allow for placing a cable, which extends through the recess 315, in such a manner that it continues to either the left or the right, if viewed in the straight direction of the recess 315. For example, a cable (not shown in Fig. 1) may extend through recess 315b, may turn to the right - while extending through recess region 316 - and may then extend through the straight recess 317 which extends perpendicularly to the recesses 315 on the opposite side of curved recess region 316. There are two peripheral straight recess regions 317 on opposite sides of block 304. The cable may then turn to the right through the recess region 316 at the end of recess 315e and may then extend through recess 315e. At the end of recess 315e, which is shown in the lower part of Fig. 1, the cable may again turn left through recess region 316 into the other straight recess 317. The other recesses 315 may be used for two other cables.

As shown in Fig. 2, the depth of the recesses 315, 316, 317 is different. The depth of recess 315 is sufficient to receive one cable. The depth of the curved recess region 316 increases from the end of recess 315 to recess 317 as indicated by a dashed line in Fig. 2. The bottom profile of the curved recess region 316 is not fully shown in Fig. 2, since the sectional view includes a region 319 of block 304 which is not recessed. Each of the curved recess regions 316 comprises such an island region 319 which is located between the two curved branches of the curved recess region 316. One of the branches extends above the plane of Fig. 2 and the other branch extends below the plane of Fig. 2. In addition, the island region 319 is located between the straight recess 317 and the two branches of the curved recess region 316.

Since the depth of the curved recess region 316 increases towards the straight recess 317, different cables can be laid upon one another. The depth of the straight recess 317 is sufficient to arrange two cables upon one another extending in the same straight direction. For example, a first cable may extend trough the lower recess 317 in Fig. 1 and may turn left into recess 315b through the recess region 316 shown in the bottom left part of Fig. 1. In addition, a second cable may extend trough recess 315a, may turn into the recess 317, thereby crossing (if viewed from above) the first cable.

The example concerning the extension of cables or electric lines given above refers to one specific application for laying three meandering cables. However, the use of the shaped block 304 shown in Fig. 1 and 2 is not restricted to this application. Rather, for example, less or more than three cables can be laid using the block 304 shown in Fig. 1 and 2.

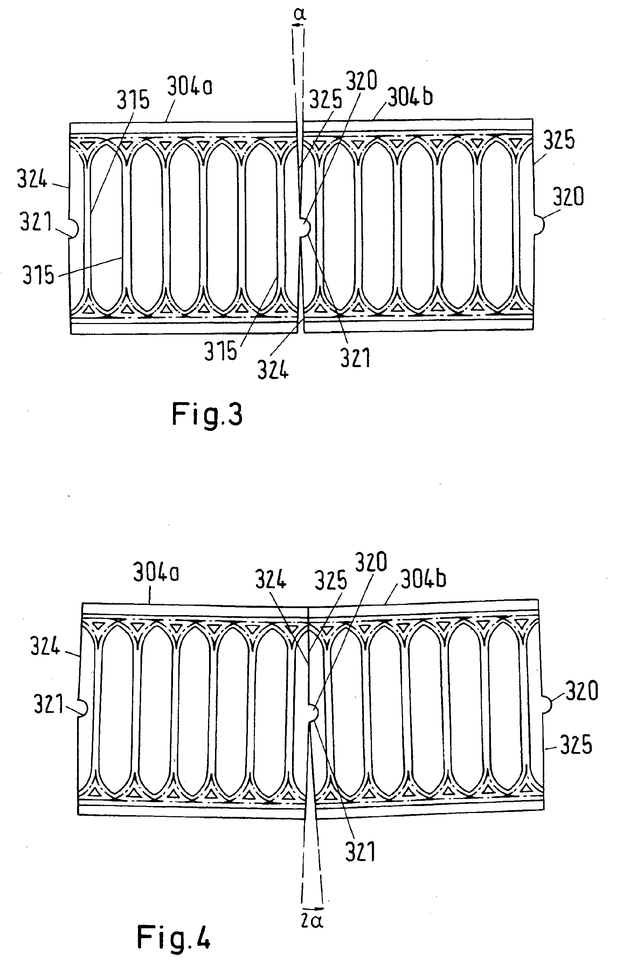

Fig. 3 shows two blocks of the type shown in Fig. 1 and 2. The blocks 304a, 304b are adjacent to each other, forming a continuous or nearly continuous path of recesses for receiving electric lines. The two blocks 304 may extend in the direction of travel together with further consecutive blocks not shown in Fig. 3 and 4. The direction of travel is parallel to the dashed line extending from left to right in Fig. 3 and 4.

Each of the blocks 304a, 304b comprises end surfaces facing in the direction of travel. The end surfaces facing to the right in Fig. 3 and 4 are denoted by 325. The end surfaces which are facing to the opposite side are denoted by 324. All end surfaces 324, 325 extend from their central region to the opposite side of the block 304 in a retreating manner. "Retreating" means that the end surface as a whole does not extend within a single plane. Rather, the parts on opposite side of the centre line of the block 304 are either curved or extend along planes which are aligned at an angle relative to each other.

According to the arrangement shown in Fig. 3, the two blocks 304a, 304b are aligned so that their centre lines are forming a common straight line. This arrangement corresponds to a straight track of a vehicle. According to the arrangement shown in Fig. 4, the centre lines are angled relative to each other which correspond to a curved track. Because of the retreating extension of the end surfaces 324, 325 which abut on each other at the interface of the blocks 304a, 304b the abutting surfaces 324, 325 include an angle which is denoted by α. In contrast, according to the arrangement shown in Fig. 4, the end surfaces 324, 325 are in full contact with each other on one side of the centre line (the top side in Fig. 4) and include an angle of two times the angle of Fig. 3 on the opposite side of the centre line. Other angles between 2 times α and -2 times α can also be achieved by using the blocks 304a, 304b.

Within their central region, the end surfaces 325 comprise a protrusion 320 which is semi-circularly shaped. The end surfaces 324 comprise a correspondingly shaped semi-circular recess 321. As shown in Fig. 3 and 4, the protrusion 320 fully engages the recess 321. Because of the curved outline of the protrusion 320 and of the recess 321, the relative orientation of the adjacent blocks 304a, 304b can be adapted within the limits given by the retreating configuration of the end surfaces 324, 325.

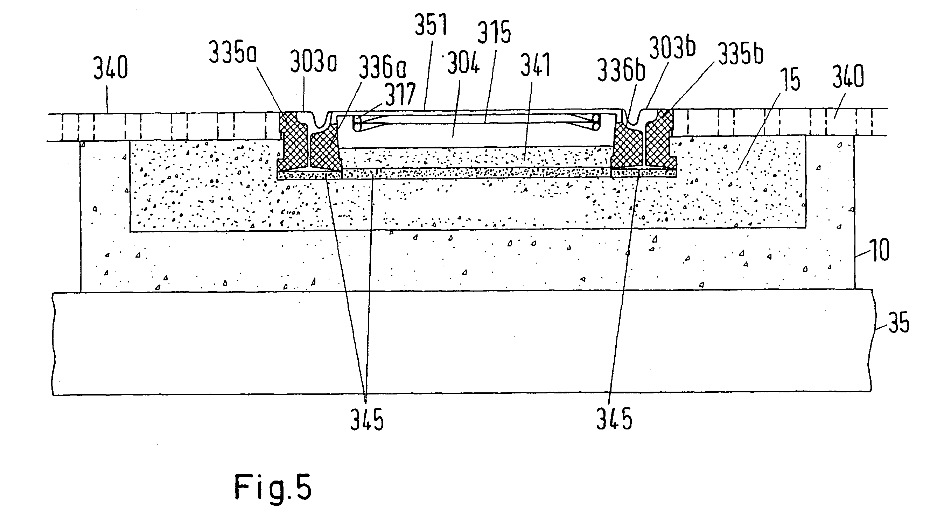

Fig. 5 shows a cross-section through the construction of a track for a rail vehicle. The two rails extending in parallel to each other are denoted by 303a, 303b. In between the rails 303, a block 304 is placed for receiving cables.

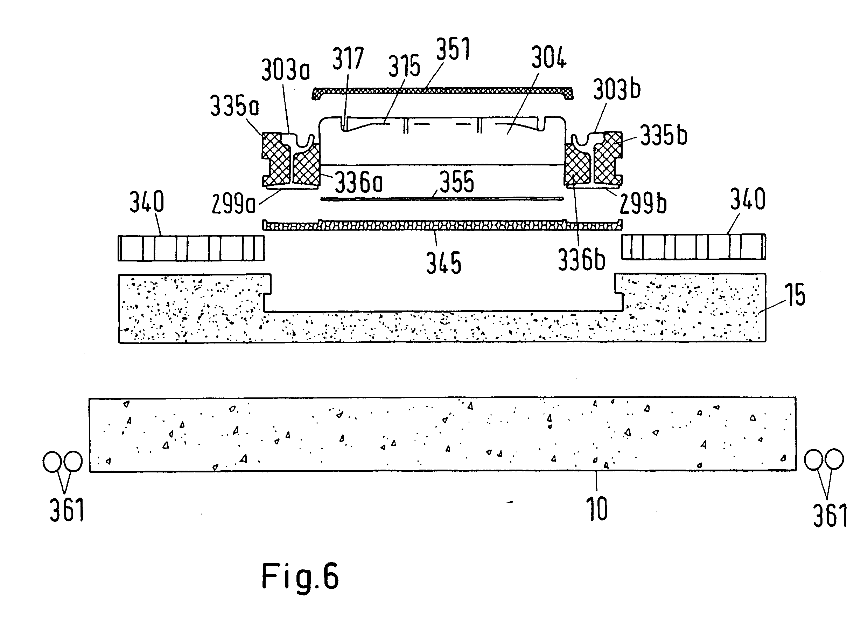

The exploded view shown in Fig. 6 comprises parts which belong to the pre-fabricated track module and also comprises additional parts of the track construction. The embodiments shown in Fig. 5 and 6 differ with respect to a base layer 10 only which is rectangular in Fig. 6 and is U-shaped in Fig. 5. In addition, Fig. 5 shows the underground 35. All other parts and elements are identical.

For preparing the placement of the pre-fabricated track module, the underground comprises a base layer 10 of concrete. In addition, on both opposite sides of the base layer 10, conduits 361 are laid (only in Fig. 6). In particular, these conduits 361 are used to place electric connection cables for connecting electric and electronic devices of the track module. These cables are parts of a power supply line to the inverter in the cavity of the track module.

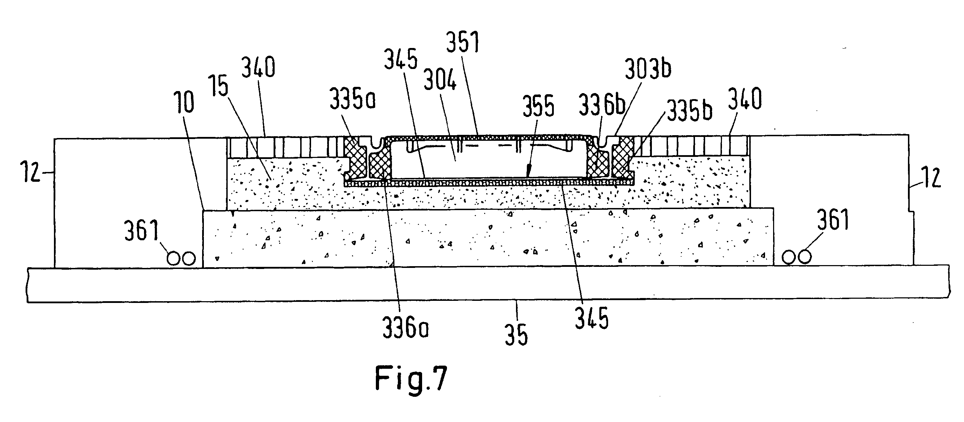

All other parts shown in Fig. 6, are parts of the pre-fabricated track module, except for a brick layer 340 which is laid on the top surface of the pre-fabricated track module. The brick layer 340 extends on both sides of the central region of the pre-fabricated track module where the rails 303 and other parts are located. The brick layer 340 serves to form a nearly horizontally extending surface of the track construction (see Fig. 7). Instead of a brick layer, the gap between the ground 12 and the central part of the track module can be filled by another material, such as concrete.

The embodiment of the track module, which is shown in Fig. 6 and 7 comprises a U-shaped bottom layer 15, preferably made of concrete. Any kind of concrete material may be used, such as conventional concrete, concrete comprising plastic material and fibre reinforced concrete. Especially, the concrete may be armed by conventional metal meshes. However, it is preferred to use light weight concrete comprising fibre particles for reinforcement and comprising plastic elements. Such a concrete material has the further advantage that vibrations caused by any rail vehicle travelling on the track are attenuated. The U-shaped bottom layer 15 defines the central region of the track module which is located in the cut-out area in between the two arms of the U. This central cut-out area is open to the top and comprises from bottom to top a layer 345 made of elastomeric material for further damping of vibrations, a shielding element 355, a support element 304 for supporting the conductor arrangement (not shown in Fig. 6 and 7) and a cover 351 made of rubber.

The layer 345 extends in horizontal direction over the whole length of the central region of the track module. In the regions of the side margins of the central regions, the two rails 303a, 303b are placed on top of the layer 345. As principally known in the art, the rails 303 are held in place using inner and outer fixing elements 335, 336, preferably made of plastic material, such as polyurethane. The support element 304 comprises recesses 315, 317 and may be constructed as shown in Fig. 1 to 5. The support element 304 is fitted tightly in between the inner fixing elements 336.

Below the support element 304, the shield 355 for shielding electromagnetic fields generated by the conductor arrangement extends between the shoes 299a, 299b, thereby electrically contacting the shoes 336. In an alternative embodiment, the shield may be connected to just one of the rails. This embodiment is used if the track is combined with a vehicle detection system using the effect that the vehicle is electrically connecting the two rails.

The cover 351 extends between the upper parts of the two rails 303 and is mechanical fixed by protruding downwardly into the grooves between the support element 304 and the rail 303. Other than shown in Fig. 6, the pre-fabricated track module, comprising the parts 15, 345, 355, 335, 336, 304 and 351 (and optionally comprising further parts, such as the conductor arrangement) is manufactured first and then positioned on top of the base layer 10. However, the different parts of the track module can be removed on site, for example the cover 351 for placing the conductor arrangement into the recesses 315, 317. After laying the conductor arrangement, the cover can be put in place again. As mentioned before, the conductor arrangement can alternatively be part of the pre-fabricated track module so that there is no need to remove the cover 351, except for maintenance and repair.

Preferably, the conductor arrangement is placed within the recesses of the support element in such a manner that the lines or wires of the conductor arrangement do not protrude above the height level of the edges of the recesses. Therefore, the cover having a nearly planar surface pointing to the support element can rest on the maximum possible upper surface of the support element.

In addition to Fig. 6, Fig. 7 shows two parts of the ground 12 on both sides of the track.

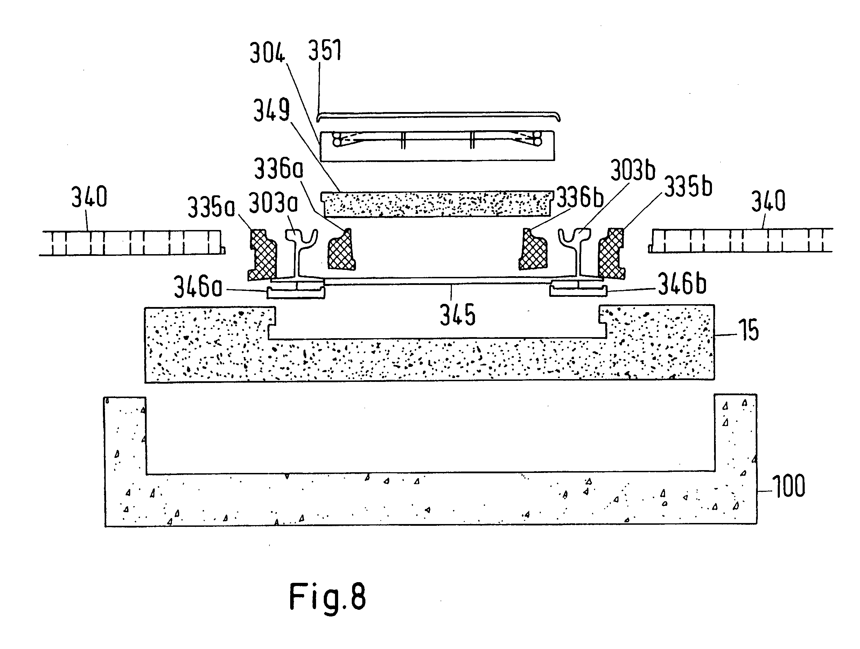

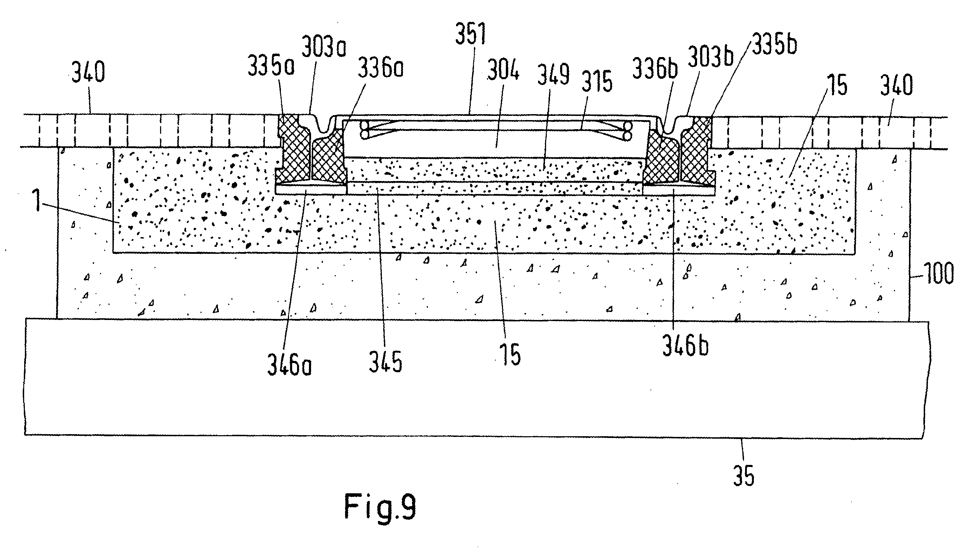

The embodiment shown in Fig. 8 and 9 slightly differs from the embodiment shown in Fig. 6 and 7. Same and corresponding parts and elements are denoted by the same reference numerals in Fig. 6 to 9. In the following, the differences between the embodiment of Fig. 8 and 9 and the embodiment of Fig. 6 and 7 are explained.

The base layer 100 made of concrete is U-shaped in contrast to the base layer 10 of Fig. 6 and 7. The base layer 100 is not part of the pre-fabricated track module. The U-shaped configuration shown in Fig. 8 can be used if the ground on the opposite sides of the track module is not suitable to fix the position and orientation of the track module sufficiently.

Instead of the layer 345 extending through the whole central region of the track module, the embodiment shown in Fig. 8 and 9 comprises two separate layers 346a, 346b, preferably made of elastomeric material, which are placed under the shoes of the rails 303. Therefore, as shown in Fig. 9, the remaining central region between the base layers 346 is occupied by the shield 345 which is electrically connected to both rails 303.

In between the inner fixing elements 336, an additional intermediate element 349, for example made of concrete, is placed under the support element 304, the height of which is smaller than the height of the support element 304 of Fig. 6 and 7.

Similarly to the view shown in Fig. 7, Fig. 9 also shows the underground 35 on which the base layer 10 respectively 100 is placed.

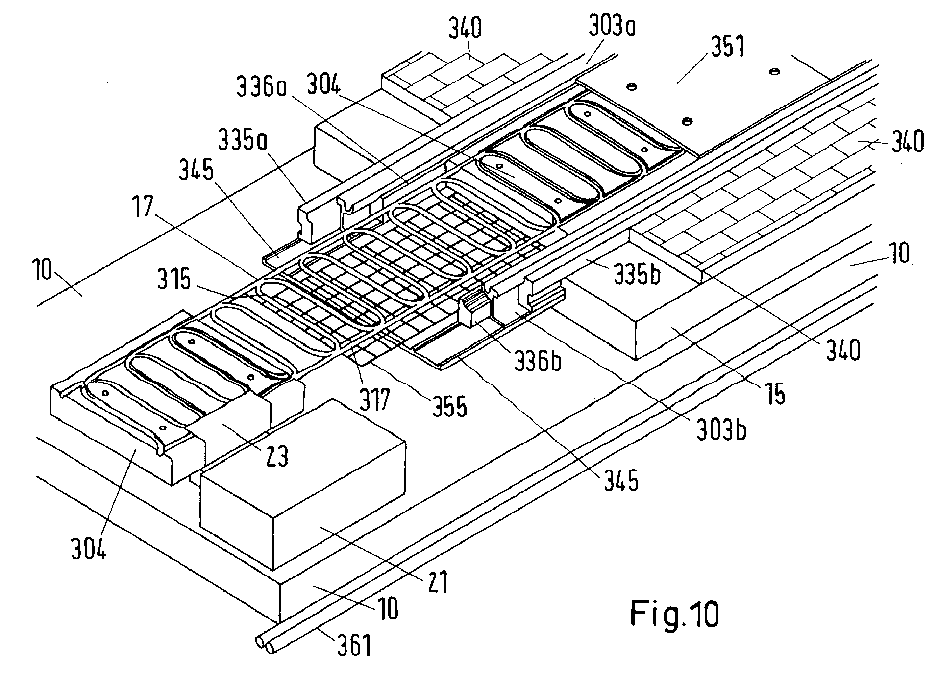

The perspective view of Fig. 10 which shows the track of Fig. 6 and 7 comprises cut-out regions. Especially, the bottom layer 15 is cut-out in the middle part and in the bottom left region of Fig. 10. As a result, the rails 303 and the fixing elements 335, 336 protrude from the bottom layer 15 in the direction of travel (towards the left and front in Fig. 10). However, the near ends of the rails 303 and the fixing elements 335, 336 are also cut away. In the bottom left part of Fig. 10, a single support element 304 is shown. In the direction of travel (towards the top right part of Fig. 10), two support elements are taken away, but the serpentine-like recesses 315, 317 of these two missing support elements are shown. As indicated by reference numeral 17, these recesses 315, 317 may be filled or partly filled with lines or wires of the conductor arrangement.

Except for the top right part of Fig. 10, the covers 351 have been removed. In the bottom part of Fig. 10, a housing or cavity 21 is shown which contains electric or electronic components (not shown in Fig. 10). For example, an inverter for producing an alternating current in the conductor arrangement 17 is located within the cavity 21. The cavity 21 is located outside of the central region of the track module, sideways of one of the rails 303b. Next to the cavity 21, a connection device 23 for electrically connecting the lines or wires of the conductor arrangement to the inverter within the cavity 21 is arranged.

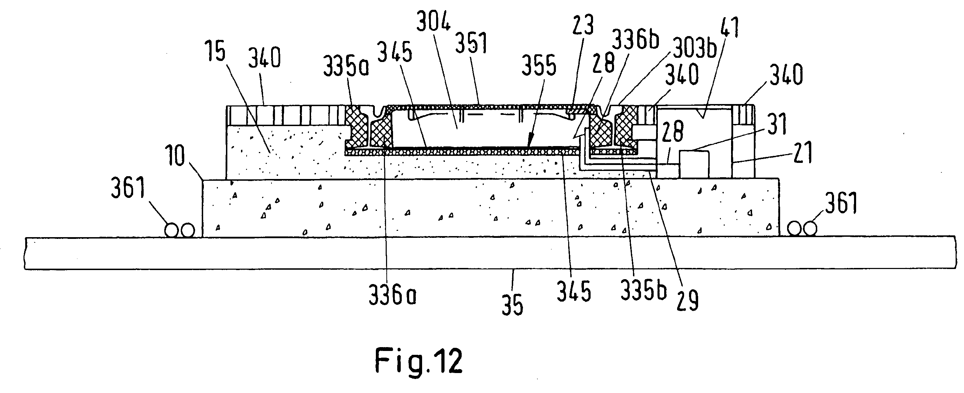

The additional cross-section of the arrangement shown in Fig. 6, 7 and 10, which is shown in Fig. 12, comprises such an inverter 31 which is connected via cables 28 to the connection device 23. The bottom layer 15 of the track module comprises a through-hole expending horizontally from the cavity 21 to a location below the support element 304, further extending upwardly through a cut-out in the layer 345 and in the shield 355 to the connection device 23. The through-hole is denoted by reference numeral 29.

The perspective view of Fig. 10 also shows the conduits 361 on one side of the track. Furthermore, part of the shield 355, a copper mesh in this embodiment, is shown in the region where the two support elements have been removed.

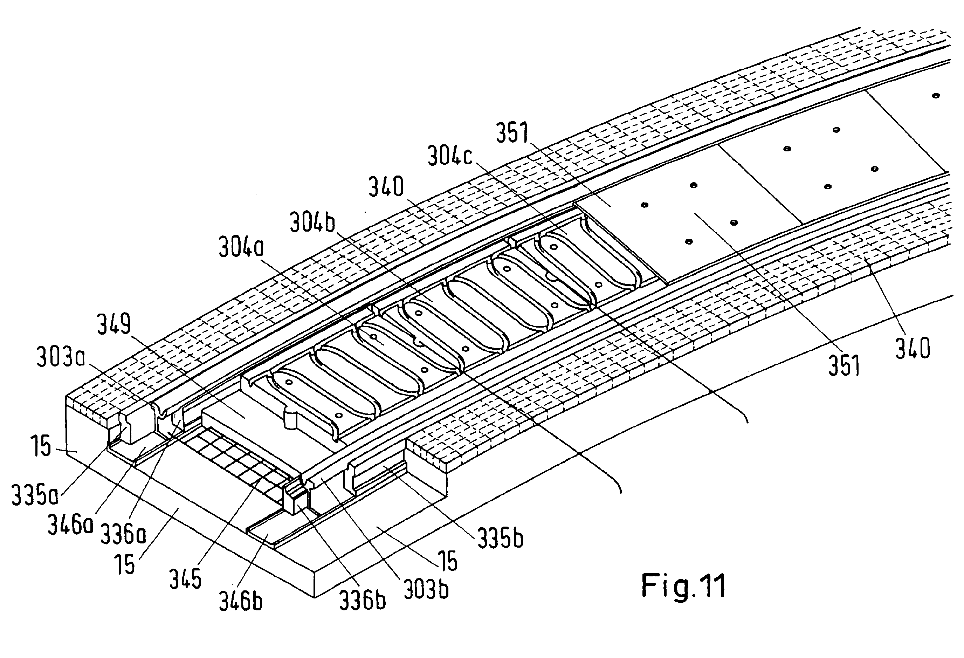

A similar perspective view is shown in Fig. 11. Some parts of the track module, which is the track module also shown in Fig. 8 and 9, is cut away. Especially, a part of the U-shaped base layer 15 in the bottom of Fig. 11 is cut away so that the outer side of rail 303b and fixing elements 335b, 336b are visible in Fig. 11.

In the central region of the track module, the shield 345 protrudes in the travel direction from the intermediate layer 349 which in turn protrudes in the travel direction from support element 304a. Further support elements 304b, 304c are visible, since three of the covers 351a have been taken away. The support elements 304 are of the type shown in Fig. 1 to 5. It can be seen that the track module of Fig. 11 is curved.

Coming back to Fig. 12, the cavity 21 is extending from the bottom of the base layer 15 to top height level of the track module, i.e. the cavity 21, which may be defined by a housing, such a metal housing, protrudes upwardly from the surface of the bottom layer 15. The gap between the upper part of the cavity 21 and the fixing element 335b is filled with bricks 340 or alternatively with other material. A lid of the cavity 21 forms part of the upper surface area of the track construction, including the bricks or other material. This means that, for example, a road automobile may cross the track.

## Claims

1. An arrangement for building a track for track bound vehicles, wherein the arrangement comprises:
- a support element (304) supporting an electric conductor arrangement, which is adapted to produce an alternating electromagnetic field and - thereby - to transfer electromagnetic energy to vehicles on the track, wherein the support element (304) confines spaces (315, 317) containing lines and/or wires of the conductor arrangement, and
- a housing or cavity (21) comprising a power supply device (31) for supplying electric power to the conductor arrangement,
**characterized in that** the arrangement comprises an electrically conductive shield (355) for shielding the alternating electromagnetic field, wherein the shield (355) extends along a plane below the spaces (315, 317), and **in that**
the support element (304), the electrically conductive shield (355) and the housing or cavity (21) form a pre-fabricated track module.

2. The arrangement of the preceding claim, wherein the pre-fabricated track module also comprises at least one vehicle guiding element (303), in particular a rail, for guiding the vehicles on the track.

3. The arrangement of the preceding claim, wherein the pre-fabricated track module comprises two vehicle guiding elements (303a, 303b), namely two rails on which wheels of a rail vehicle roll while the vehicle is travelling on the track.

4. The arrangement of the preceding claim, wherein the shield (355) is electrically connected to at least one of the rails (303).

5. The arrangement of one of the preceding claim, wherein the pre-fabricated track module also comprises at least one through-hole (29) extending from the housing or cavity (21) to at least one of the spaces, the through-hole (29) being adapted to receive wires and/or cables (28) for electrically contacting the power supply device (31) within the housing or cavity (21) with the conductor arrangement.

6. The arrangement of one of the preceding claims, wherein a plurality of the spaces (315), which contain lines and/or wires (17) of the conductor arrangement, extend transversely to the travel direction of the vehicle which is defined by the track, and the lines and/or wires (17) are laid in a serpentine-like manner on the support element.

7. The arrangement of one of the preceding claims, wherein an inverter (31) for inverting a direct current of a supply line to an alternating current in the conductor arrangement is located within the housing or cavity (21).

8. The arrangement of one of the preceding claims, wherein the pre-fabricated track module also comprises a detector arrangement for detecting the presence of a vehicle upon the track module, wherein the detector arrangement comprises a detection device which is located in the housing or cavity (21).

9. A method of building a track for track bound vehicles, the method comprising the steps:
- providing a support element (304) for supporting an electric conductor arrangement, which is adapted to produce an alternating electromagnetic field and - thereby - to transfer electromagnetic energy to vehicles on the track, wherein the support element (304) confines spaces (315, 317) for receiving lines and/or wires (17) of the conductor arrangement,
- providing an electrically conductive shield (355) for shielding the alternating electromagnetic field, wherein the shield (355) extends along a plane below the spaces (315, 317),
- providing a housing or cavity (21) for receiving a power supply device (31) for supplying electric power to the conductor arrangement,
- forming a pre-fabricated track module from the support element (304), the electrically conductive shield (355) and the housing or cavity (21),
- arranging the lines and/or wires of the conductor arrangement in the spaces (315, 317) and
- placing the power supply device (31) in the housing or cavity (21).

10. The method of claim 9, wherein the pre-fabricated track module is formed also from two rails on which wheels of a rail vehicle can roll while the vehicle is travelling on the track.

11. The method of the preceding claim, wherein the shield is electrically connected to at least one of the rails.

12. The method of one of claims 9 - 11, wherein at least one through-hole is formed in the pre-fabricated track module, the hole extending from the housing to at least one of the spaces, wherein the through-hole is adapted to receive wires and/or cables for electrically contacting the power supply device within the housing with the conductor arrangement.

13. The method of one of claims 9 - 12, wherein a plurality of the spaces for receiving lines and/or wires of the conductor arrangement are formed in the support module in such a manner that the spaces extend transversely to the travel direction of the vehicle which is defined by the track, and the lines and/or wires are laid in a serpentine-like manner on the support element.

14. The method of one of claims 9 - 13, wherein an inverter for inverting a direct current of a supply line to an alternating current in the conductor arrangement is placed within the housing or cavity (21).

15. The method of one of claims 9 - 14, wherein a detector arrangement for detecting the presence of a vehicle upon the track module is integrated in the pre-fabricated track module and wherein a detection device of the detector arrangement is placed in the housing or cavity (21).

## Patentansprüche

1. Anordnung zum Bau einer Fahrstrecke für streckengebundene Fahrzeuge, wobei die Anordnung aufweist:
- ein Stützelement (304) zum Abstützen einer elektrischen Leiteranordnung, die ausgestaltet ist, ein elektromagnetisches Wechselfeld zu erzeugen und dadurch elektromagnetische Energie an Fahrzeuge auf der Fahrstrecke zu übertragen, wobei das Stützelement (304) Bereiche (315, 317), die Leitungen und / oder Drähte der Leiteranordnung enthalten, eingrenzt, und
- ein Gehäuse oder einen Hohlraum (21) aufweisend eine Leistungsversorgungseinrichtung (31) zum Versorgen der Leiteranordnung mit elektrischer Leistung,
**dadurch gekennzeichnet,**
**dass** die Anordnung eine elektrisch leitende Abschirmung (355) zum Abschirmen des elektromagnetischen Wechselfeldes aufweist, wobei sich die Abschirmung (355) entlang einer Ebene unterhalb der Bereiche (315, 317) erstreckt, und dass das Stützelement (304), die elektrisch leitende Abschirmung (355) und das Gehäuse oder der Hohlraum (21) ein vorgefertigtes Fahrstreckenmodul bilden.

2. Anordnung nach dem vorhergehenden Anspruch, wobei das vorgefertigte Fahrstreckenmodul auch zumindest ein Fahrzeugführungselement (303), insbesondere eine Schiene, zur Führung der Fahrzeuge auf der Fahrstrecke aufweist.

3. Anordnung nach dem vorhergehenden Anspruch, wobei das vorgefertigte Fahrstreckenmodul zwei Fahrzeugführungselemente (303a, 303b) aufweist, nämlich zwei Schienen, auf denen Räder eines Schienenfahrzeugs rollen, während das Fahrzeug auf der Fahrstrecke fährt.

4. Anordnung nach dem vorhergehenden Anspruch, wobei die Abschirmung (355) mit mindestens einer der Schienen (303) elektrisch verbunden ist.

5. Anordnung nach einem der vorhergehenden Ansprüche, wobei das vorgefertigte Fahrstreckenmodul mindestens ein Durchgangsloch (29) aufweist, das sich vom Gehäuse oder Hohlraum (21) bis zu mindestens einem der Bereiche erstreckt, wobei das Durchgangsloch (29) angepasst ist, Drähte und/oder Kabel (28) aufzunehmen, um die Leistungsversorgungseinrichtung (31) innerhalb des Gehäuses oder Hohlraums (21) mit der Leiteranordnung elektrisch zu kontaktieren.

6. Anordnung nach einem der vorhergehenden Ansprüche, wobei eine Mehrzahl der Bereiche (315), die Drähte und/oder Kabel (17) der Leiteranordnung enthalten, sich quer zur Fahrtrichtung des Fahrzeugs, definiert durch die Fahrstrecke, erstrecken, und die Drähte und/oder Kabel (17) in einer serpentinenartigen Weise auf dem Stützelement verlegt sind.

7. Anordnung nach einem der vorhergehenden Ansprüche, wobei ein Inverter (31) zum Invertieren eines Gleichstroms einer Versorgungsleitung in einen Wechselstrom in der Leiteranordnung innerhalb des Gehäuses oder Hohlraums (21) untergebracht ist.

8. Anordnung nach einem der vorhergehenden Ansprüche, wobei das vorgefertigte Fahrstreckenmodul auch eine Detektoranordnung zum Detektieren der Anwesenheit eines Fahrzeugs auf dem Fahrstreckenmodul aufweist, wobei die Detektoranordnung eine Detektionseinrichtung, die im Gehäuse oder Hohlraum (21) angeordnet ist, aufweist.

9. Verfahren zum Bau einer Fahrstrecke für streckengebundene Fahrzeuge, wobei das Verfahren die Schritte aufweist:
- Bereitstellen eines Stützelements (304) zum Abstützen einer elektrischen Leiteranordnung, die ausgestaltet ist, ein elektromagnetisches Wechselfeld zu erzeugen und dadurch elektromagnetische Energie an Fahrzeuge auf der Fahrstrecke zu übertragen, wobei das Stützelement (304) Bereiche (315, 317) zum Aufnehmen von Leitungen und/oder Drähten der Leiteranordnung eingrenzt,
- Bereitstellen einer elektrisch leitenden Abschirmung (355) zum Abschirmen des elektromagnetischen Wechselfeldes, wobei die Abschirmung (355) sich entlang einer Ebene unterhalb der Bereiche (315, 317) erstreckt,
- Bereitstellen eines Gehäuses oder Hohlraums (21) zum Aufnehmen einer Leistungsversorgungseinrichtung (31) zum Versorgen der Leiteranordnung mit elektrischer Leistung,
- Bilden eines vorgefertigten Fahrstreckenmoduls aus dem Stützelement (304), der elektrisch leitenden Abschirmung (355) und dem Gehäuse oder Hohlraum (21),
- Anordnen der Leitungen und/oder Drähte der Leiteranordnung in den Bereichen (315, 317) und
- Unterbringen der Leistungsversorgungseinrichtung (31) im Gehäuse oder Hohlraum (21).

10. Verfahren nach Anspruch 9, wobei das vorgefertigte Fahrstreckenmodul ebenfalls aus zwei Schienen, auf denen Räder eines Schienenfahrzeugs rollen können, während das Fahrzeug auf der Fahrstrecke fährt, gebildet wird.

11. Verfahren nach dem vorhergehenden Anspruch, wobei die Abschirmung mit mindestens einer der Schienen elektrisch verbunden wird.

12. Verfahren nach einem der Ansprüche 9-11, wobei zumindest ein Durchgangsloch im vorgefertigten Fahrstreckenmodul gebildet wird, wobei das Loch sich vom Gehäuse bis zu mindestens einem der Bereiche erstreckt, wobei das Durchgangsloch ausgestaltet ist, Drähte und/oder Kabel aufzunehmen, um die Leistungsversorgungseinrichtung im Gehäuse mit der Leiteranordnung elektrisch zu kontaktieren.

13. Verfahren nach einem der Ansprüche 9-12, wobei eine Mehrzahl der Bereiche zur Aufnahme von Leitungen und/oder Drähten der Leiteranordnung im Stützmodul derart gebildet werden, dass sich die Bereiche quer zur Fahrtrichtung des Fahrzeugs, welche durch die Fahrstrecke definiert wird, erstrecken, so dass die Leitungen und/oder Drähte in einer serpentinenartigen Weise auf dem Stützelement verlegt sind.

14. Verfahren nach einem der Ansprüche 9-13, wobei ein Inverter zum Invertieren des Gleichstroms aus einer Versorgungsleitung in Wechselstrom in der Leiteranordnung im Gehäuse oder Hohlraum (21) angeordnet wird.

15. Verfahren nach einem der Ansprüche 9-14, wobei eine Detektoranordnung zum Detektieren der Anwesenheit eines Fahrzeugs auf dem Fahrstreckenmodul in das vorgefertigte Fahrstreckenmodul integriert wird und wobei eine Detektionseinrichtung der Detektoranordnung im Gehäuse oder Hohlraum (21) angeordnet wird.

## Revendications

1. Agencement pour construire une voie pour véhicules sur voie, dans lequel l'agencement comprend :
- un élément de support (304) supportant un agencement conducteur électrique, qui est adapté pour produire un champ électromagnétique alternatif et - ainsi - pour transférer de l'énergie électromagnétique à des véhicules sur la voie, dans lequel l'élément de support (304) confine des espaces (315, 317) contenant des lignes et/ou fils de l'agencement conducteur, et
- un logement ou une cavité (21) comprenant un dispositif d'alimentation en énergie électrique (31) pour fournir de l'énergie électrique à l'agencement conducteur, **caractérisé en ce que** l'agencement comprend
un écran électriquement conducteur (355) pour parer le champ électromagnétique alternatif, dans lequel l'écran (355) s'étend le long d'un plan sous les espaces (315, 317), et **en ce que**
l'élément de support (304), l'écran électriquement conducteur (355) et le logement ou la cavité (21) forment un module de voie préfabriqué.

2. Agencement selon la revendication précédente, dans lequel le module de voie préfabriqué comprend également au moins un élément de guidage de véhicule (303), en particulier un rail, pour guider les véhicules sur la voie.

3. Agencement selon la revendication précédente, dans lequel le module de voie préfabriqué comprend deux éléments de guidage de véhicule (303a, 303b), à savoir deux rails sur lesquels des roues d'un véhicule sur rails roulent alors que le véhicule se déplace sur la voie.

4. Agencement selon la revendication précédente, dans lequel l'écran (355) est électriquement connecté à au moins un des rails (303).

5. Agencement selon une des revendications précédentes, dans lequel le module de voie préfabriqué comprend également au moins un trou débouchant (29) s'étendant du logement ou de la cavité (21) à au moins un des espaces, le trou débouchant (29) étant adapté pour recevoir des fils et/ou câbles (28) pour mettre électriquement en contact le dispositif d'alimentation en énergie électrique (31) à l'intérieur du logement ou de la cavité (21) avec l'agencement conducteur.

6. Agencement selon une des revendications précédentes, dans lequel une pluralité des espaces (315), qui contiennent des lignes et/ou fils (17) de l'agencement conducteur, s'étendent transversalement à la direction de déplacement du véhicule qui est définie par la voie, et les lignes et/ou fils (17) sont posés de manière similaire à un serpentin sur l'élément de support.

7. Agencement selon une des revendications précédentes, dans lequel un onduleur (31) pour transformer un courant continu d'une ligne d'alimentation en un courant alternatif dans l'agencement conducteur est situé à l'intérieur du logement ou de la cavité (21).

8. Agencement selon une des revendications précédentes, dans lequel le module de voie préfabriqué comprend également un agencement détecteur pour détecter la présence d'un véhicule sur le module de voie, dans lequel l'agencement détecteur comprend un dispositif de détection qui est situé dans le logement ou cavité (21).

9. Procédé de building une voie pour véhicules sur voie, le procédé comprenant les étampes :
- la fourniture d'un élément de support (304) pour supporter un agencement conducteur électrique, qui est adapté pour produire un champ électromagnétique alternatif et - ainsi - pour transférer de l'énergie électromagnétique à des véhicules sur la voie, dans lequel l'élément de support (304) confine des espaces (315, 317) pour recevoir des lignes et/ou fils (17) de l'agencement conducteur,
- la fourniture d'un écran électriquement conducteur (355) pour parer le champ électromagnétique alternatif, dans lequel l'écran (355) s'étend le long d'un plan sous les espaces (315, 317),
- la fourniture d'un logement ou d'une cavité (21) pour recevoir un dispositif d'alimentation en énergie électrique (31) pour fournir de l'énergie électrique à l'agencement conducteur,
- la formation d'un module de voie préfabriqué à partir de l'élément de support (304), de l'écran électriquement conducteur (355) et du logement ou cavité (21),
- l'agencement des lignes et/ou fils de l'agencement conducteur dans les espaces (315, 317), et
- le positionnement du dispositif d'alimentation en énergie électrique (31) dans le logement ou la cavité (21).

10. Procédé selon la revendication 9, dans lequel le module de voie préfabriqué est formé également à partir de deux rails sur lesquels des roues d'un véhicule sur rails peuvent rouler alors que le véhicule se déplace sur la voie.

11. Procédé selon la revendication précédente, dans lequel l'écran est électriquement connecté à au moins un des rails.

12. Procédé selon une quelconque des revendications 9 à 11, dans lequel au moins un trou débouchant est formé dans le module de voie préfabriqué, le trou s'étendant du logement à au moins un des espaces, dans lequel le trou débouchant est adapté pour recevoir des fils et/ou câbles pour mettre électriquement en contact le dispositif d'alimentation en énergie électrique à l'intérieur du logement avec l'agencement conducteur.

13. Procédé selon une quelconque des revendications 9 à 12, dans lequel une pluralité des espaces pour recevoir des lignes et/ou fils de l'agencement conducteur sont formés dans le module de support de manière telle que les espaces s'étendent transversalement à la direction de déplacement du véhicule qui est définie par la voie, et les lignes et/ou fils sont posés de manière similaire à un serpentin sur l'élément de support.

14. Procédé selon une quelconque des revendications 9 à 13, dans lequel un onduleur pour transformer un courant continu d'une ligne d'alimentation en un courant alternatif dans l'agencement conducteur est positionné à l'intérieur du logement ou de la cavité (21).

15. Procédé selon une quelconque des revendications 9 à 14, dans lequel un agencement détecteur pour détecter la présence d'un véhicule sur le module de voie est intégré dans le module de voie préfabriqué et dans lequel un dispositif de détection de l'agencement détecteur est positionné dans le logement ou la cavité (21).
